# EUROPÄISCHE PATENTSCHRIFT

(11) **EP 3 581 497 B1**
(45) Veröffentlichungstag und Bekanntmachung des Hinweises auf die Patenterteilung: **19.10.2022**
(21) Anmeldenummer: 19178373.7
(22) Anmeldetag: 05.06.2019
(51) Int. Cl.: B64D 13/06

(54) **KÜHLSYSTEM MIT ZWEI WÄRMETAUSCHERN UND FAHRZEUG MIT EINEM KÜHLSYSTEM**
COOLING SYSTEM WITH TWO HEAT EXCHANGERS AND VEHICLE WITH A COOLING SYSTEM
SYSTÈME DE REFROIDISSEMENT POURVU DE DEUX ÉCHANGEURS DE CHALEUR ET VÉHICULE DOTÉ D'UN SYSTÈME DE REFROIDISSEMENT

(30) Priorität: 15.06.2018 DE 102018114353
(43) Veröffentlichungstag der Anmeldung: 18.12.2019
(73) Patentinhaber: Airbus Defence and Space GmbH, 82024 Taufkirchen (DE)
(72) Erfinder: Schöll, Robert, 22587 Hamburg (DE)
(74) Vertreter: Schornack, Oliver

(56) Entgegenhaltungen:
- DE-T5-112014 002 672
- FR-A1- 3 051 894
- US-A1- 2012 000 630

## Beschreibung

Die Erfindung betrifft ein Kühlsystem mit zwei Wärmetauschern und ein Fahrzeug mit solch einem Kühlsystem. Insbesondere betrifft die Erfindung ein Kühlsystem mit einer Steuereinrichtung, die es ermöglicht, einen Volumenstrom eines Kühlmittels in dem Kühlsystem dem zweiten Wärmetauscher so zuzuführen, dass das Kühlmittel stromabwärts des ersten und/oder zweiten Wärmetauschers eine Temperatur, die einer vorgegebenen Viskosität des Kühlmittels entspricht, nicht unterschreitet.

Beispiele des Standes der Technik werden von FR3051894 A1, US2012000630 A1 und DE112014002672 T5 bereitgestellt.

In Fahrzeugen, wie zum Beispiel Flugzeugen, Bussen, Zügen, Schiffen, etc., sind viele Wärmequellen installiert, wobei auch Passagiere oder Fracht Wärme erzeugen und/oder abgeben können. Für die Kühlung dieser Wärmequellen wird meist ein Kühlsystem eingesetzt, welches ein Kühlmittel umfasst, das Wärme von den Wärmequellen aufnimmt und an eine Wärmesenke abgibt. Als Wärmesenke dient meist Umgebungsluft, die mittels Wärmetauscher mit dem Kühlmittel thermisch gekoppelt wird.

Das Kühlsystem muss einerseits dazu ausgelegt sein, je nach Temperatur der Umgebungsluft und erzeugter Abwärme der Wärmequelle(n), die maximale Abwärme der Wärmequelle(n) an die Wärmesenke abgeben zu können, und andererseits dazu ausgelegt sein, eine zu starke Kühlung des Kühlmittels zu verhindern. Beispielsweise kann bei geringer Abwärme und/oder sehr tiefen Temperaturen der Umgebungsluft die Viskosität des Kühlmittels nach Abkühlung in dem Wärmetauscher stark ansteigen. Dies beeinträchtigt jedoch die Fördermöglichkeit des Kühlmittels durch eine Fördereinrichtung oder kann die Fördereinrichtung sogar beschädigen. Konventionelle Kühlsysteme sehen daher eine Bypassleitung vor, durch die erwärmtes Kühlmittel an dem Wärmetauscher vorbeigeleitet werden kann, und dort mit dem gekühlten Kühlmittel vermischt werden kann. Dadurch lässt sich die Viskosität des Kühlmittels vor der Fördereinrichtung verbessern. Alternativ kann auch eine Absperrvorrichtung, beispielsweise eine Klappe, vorgesehen sein, die einen Luftstrom der Umgebungsluft zu dem Wärmetauscher begrenzt, sodass die Kühlleistung des Wärmetauschers reduziert wird.

Der Erfindung liegt die Aufgabe zugrunde, ein verbessertes Kühlsystem bereitzustellen, welches in der Lage ist, mit einfachen Mitteln eine Überkühlung des Kühlmittels zu vermeiden. Ferner liegt der Erfindung die Aufgabe zugrunde, ein Fahrzeug mit solch einem Kühlsystem bereitzustellen.

Diese Aufgabe wird durch ein Kühlsystem mit den Merkmalen des Anspruchs 1 und durch ein Fahrzeug mit den Merkmalen des Anspruchs 7 gelöst.

Gemäß einem ersten Aspekt umfasst ein Kühlsystem mit Vereisungsschutz für ein in dem Kühlsystem strömendes Kühlmittel einen ersten Wärmetauscher, der dazu eingerichtet ist, dem Kühlmittel Wärmeenergie zu entziehen, wobei der erste Wärmetauscher einen ersten Fluidstrom als Wärmesenke nutzt, und einen zweiten Wärmetauscher, der dazu eingerichtet ist, dem Kühlmittel Wärmeenergie zu entziehen, wobei der zweite Wärmetauscher einen zweiten Fluidstrom, der sich von dem ersten Fluidstrom unterscheidet, als Wärmesenke nutzt. Bei dem ersten und zweiten Fluidstrom kann es sich um das gleiche Fluid handeln oder um ein unterschiedliches Fluid. Beispielsweise können sowohl der erste Wärmetauscher als auch der zweite Wärmetauscher Luft als Wärmesenke verwenden, wobei die Luftströme parallel zueinander strömen. Mit anderen Worten sind der erste und zweite Wärmetauscher in Bezug auf den/die als Wärmesenke genutzte/n Fluidstrom/ströme parallel zueinander angeordnet.

In einer anderen Ausgestaltung kann einer der beiden Fluidströme ein Luftstrom sein, während der andere aus Wasser oder einer anderen Flüssigkeit gebildet wird, oder beide Fluidströme bestehen aus einer Flüssigkeit.

Das Kühlsystem kann ferner eine Fördereinrichtung umfassen, die dazu eingerichtet ist, das Kühlmittel dem ersten Wärmetauscher und dem zweiten Wärmetauscher zuzuführen. Beispielsweise kann die Fördereinrichtung in Form einer Pumpe zur Förderung eines flüssigen oder gasförmigen Kühlmittels vorgesehen sein. Selbstverständlich kann die Fördereinrichtung auch in Form eines Kompressors vorgesehen sein, der gasförmiges Kühlmittel dem ersten und zweiten Wärmetauscher zuführt.

Des Weiteren umfasst das Kühlsystem ein Ventil, das dazu eingerichtet ist, einen Volumenstrom des Kühlmittels, das dem zweiten Wärmetauscher zugeführt wird, zu regulieren. Beispielsweise kann das Ventil einen Querschnitt eines Ventilabschnitts, der von dem Kühlmittel durchströmt wird, so (stufenlos) verändern, dass das Ventil den Querschnitt vollständig verschließt oder vollständig öffnet oder in einer Zwischenstellung einen Teil des Querschnitts zum Durchströmen mit Kühlmittel offen lässt.

Das Kühlsystem enthält ferner mindestens einen Temperatursensor, der dazu eingerichtet ist, eine Temperatur des Kühlmittels stromabwärts des ersten Wärmetauschers und/oder des zweiten Wärmetauschers zu messen, und eine Steuereinheit, die dazu eingerichtet ist, eine Fördermenge der Fördereinrichtung und/oder den von dem Ventil regulierten Volumenstrom derart zu steuern, dass die von dem Temperatursensor gemessene Temperatur einen Schwellenwert, der einer vorgegebenen Viskosität des Kühlmittels entspricht, nicht unterschreitet. Mit anderen Worten wird die Fördereinrichtung und das Ventil von der Steuereinheit so reguliert, dass das Kühlmittel stromabwärts der beiden Wärmetauscher immer eine bestimmte Temperatur aufweist, sodass die Viskosität des Kühlmittels nach oben begrenzt ist. Mit steigender Temperatur sinkt die Viskosität des Kühlmittels, sodass das Kühlmittel stromabwärts der beiden Wärmetauscher und somit stromaufwärts der Fördereinrichtung ebenfalls mit der nach oben begrenzten Viskosität vorliegt.

Beispielsweise kann ein wasserbasiertes Kühlmittel eingesetzt werden. Hierzu zählt Ethylenglykol-Wasser (EGW) in einem Mischungsverhältnis von zum Beispiel 50/50, oder Propylenglykol-Wasser (PGW) im Mischungsverhältnis 60/40. Diese Kühlmittel zeichnen sich durch ein gutes Wärmetransportvermögen mit Förderfähigkeit bei niedrigen Temperaturen und auch einen hohen Berstschutz aus, d.h. auch bei tieferen Temperaturen und möglichem Einfrieren dehnt sich das Kühlmittel nicht weiter aus, wodurch die kühlmittelbeinhaltenden Einrichtungen nicht beschädigt werden. Das Temperaturniveau, bei dem diese Gemische ihre normale flüssige Eigenschaft verlieren und insbesondere von Zentrifugalpumpen nicht mehr sinnvoll gefördert werden können, liegt bei den angegebenen Mischungsverhältnissen für EGW bei ca. - 32 °C bis -34 °C und PGW bei ca. -43 °C bis -45 °C.

Andere Wärmeträger wie Silikonöle oder bestimmte Fluorkohlenwasserstoffe (Handelsnamen Novec, Galden) sind im Allgemeinen auch noch bei tieferen Temperaturen förderfähig, obwohl auch dort die Viskosität stark steigt. Diese sind aber in der spezifischen Wärmetransportfähigkeit den wasserbasierten Wärmeträgern deutlich unterlegen und nebenbei teurer.

In konventionellen Kühlsystemen kann die Anordnung einer Bypassleitung, die Kühlmittel an dem meist einzigen Wärmetauscher vorbeileitet, dazu führen, dass bei geringerem Kühlbedarf und/oder sehr niedrigen Temperaturen der Wärmesenke das Kühlmittel fast vollständig durch die Bypassleitung geführt wird. Dabei kann jedoch verbleibendes Kühlmittel in dem Wärmetauscher überkühlt werden, d.h. das Kühlmittel wird so stark gekühlt, dass die Viskosität des Kühlmittels derart zunimmt, dass es in dem Kühlsystem nicht mehr gefördert werden kann, oder in dem Wärmetauscher zu so hohen Druckverlusten führt, dass die Fließrate stark beeinträchtigt ist. Beispielsweise kann das Kühlmittel in dem Wärmetauscher gefrieren oder an den Wänden der kühlmittelführenden Leitungen in dem Wärmetauscher kristallisieren oder vereisen, sodass der Querschnitt des Wärmetauschers stark eingeschränkt oder ganz verschlossen ist. In diesem Fall (und insbesondere bei sehr tiefen Temperaturen des die Wärmesenke bildenden Fluids) kann das Kühlsystem versagen, da mit Überschreiten eines bestimmten Viskositätswertes sowie mit Eintreten der Vereisung gar keine Kühlung mehr stattfindet. Als Konsequenz wird die Wärmequelle überhitzen. Ein Enteisen (Auftauen) des Wärmetauschers kann aufgrund der Bypassleitung unmöglich sein, da ein Verschließen der Bypassleitung zwar den Druck des Kühlmittels im Einlassbereich des Wärmetauschers erhöht, diesen aber nicht notwendigerweise enteist, wenn kein Durchfluss des Kühlmittels möglich ist.

Bei konventionellen Kühlsystemen mit einer Absperrvorrichtung (beispielsweise einer Klappe) für das dem Wärmetauscher zugeführte, eine Wärmesenke bildende Fluid ist bei eingetretener Vereisung des Wärmetauschers ein Auftauen des Wärmetauschers ebenfalls schwer möglich. Selbst wenn die Absperrvorrichtung den Fluidstrom gänzlich stoppt, kann der bereits geschlossene Querschnitt innerhalb des Wärmetauschers für das Kühlmittel nur langsam aufgetaut (geöffnet) werden. In dieser Zeit kann die Fördereinrichtung des Kühlsystems Schaden nehmen und/oder die der Wärmequelle zur Verfügung gestellte Kühlleistung nicht ausreichen. Zudem stellt die Absperrvorrichtung einen Widerstand in dem als Wärmesenke dienenden Fluidstrom dar, der zu einer Reduzierung der Energieeffizienz des Gesamtsystems (beispielsweise eines Fahrzeugs) führt. Wird der Fluidstrom beispielsweise durch die Bewegung des Fahrzeugs erzeugt, beispielsweise Umgebungsluft, die durch einen Stauluftkanal geführt wird, wird bei Schließen der Absperrvorrichtung die Strömung am Eingang des Stauluftkanals verändert, wodurch ungünstige Strömungen entstehen und somit die Aerodynamik des Fahrzeugs beeinträchtigt werden kann.

Das hier beschriebene Kühlsystem bietet hingegen den Vorteil, dass die Steuereinheit eine Überkühlung des Kühlmittels verhindert. Als Überkühlung wird hier das Überschreiten eines Schwellenwerts der Viskosität des Kühlmittels ebenso verstanden, wie ein Einfrieren oder Kristallisieren zumindest eines Teils des Kühlmittels innerhalb oder stromabwärts des Wärmetauschers. Durch Steuerung der Fördermenge der Fördereinrichtung und/oder des Volumenstroms des Kühlmittels durch das Ventil, der dem zweiten Wärmetauscher zugeführt wird, kann eine vorgegebene Menge des Kühlmittels immer durch den ersten Wärmetauscher geführt werden, während bei höherer erforderter Kühlleistung Kühlmittel auch durch den zweiten Wärmetauscher geführt und gekühlt werden kann. Damit lässt sich der erste Wärmetauscher so dimensionieren, dass ein Überkühlen des Kühlmittels nur durch den ersten Wärmetauscher nicht möglich ist. Beispielsweise kann der erste Wärmetauscher kleiner als in konventionellen Kühlsystemen dimensioniert werden, sodass er bei üblichen zu erwartenden Temperaturen des als Wärmesenke dienenden Fluids und bei üblichen zu erwartenden Kühlleistungen das Kühlmittel nicht derart kühlen kann, dass die Viskosität den Schwellenwert überschreitet. Eine erhöhte Kühlleistung des Kühlsystems wird durch Öffnen des Ventils und/oder Steigerung der Fördermenge durch die Fördereinrichtung ermöglicht.

In einer Ausgestaltungsvariante kann das Kühlsystem ferner eine erste Kühlmittelleitung, die dazu eingerichtet ist, von einer Wärmequelle erwärmtes Kühlmittel zu dem ersten Wärmetauscher zu leiten, und eine zweite Kühlmittelleitung, die von der ersten Kühlmittelleitung abzweigt und dazu eingerichtet ist, das von der Wärmequelle erwärmte Kühlmittel zumindest teilweise zu dem zweiten Wärmetauscher zu leiten, umfassen. Dabei ist das Ventil in der zweiten Kühlmittelleitung angeordnet und dazu eingerichtet, den Volumenstrom des durch die zweite Kühlmittelleitung strömenden Kühlmittels zu regulieren. Diese Anordnung erlaubt den Einsatz eines einfachen Ventils (eines Ventils mit nur einem Eingang und einem Ausgang), das innerhalb der zweiten Kühlmittelleitung angeordnet ist und den Durchfluss durch die zweite Kühlmittelleitung reguliert.

Konventionelle Kühlsysteme mit Bypassleitung weisen meist ein Dreiwegeventil auf, welches den jeweiligen Volumenstrom in die Bypassleitung und zu dem Wärmetauscher reguliert. Diese Dreiwegeventile sind jedoch teurer, wartungsintensiver und schwerer. Bei dem hier beschriebenen Kühlsystem wird hingegen durch Verschließen des einfachen Ventils in der zweiten Kühlmittelleitung der Volumenstrom zum zweiten Wärmetauscher unterbunden, sodass das gesamte von der Fördereinrichtung bewegte Kühlmittel dem ersten Wärmetauscher zugeführt wird.

In einer anderen Ausgestaltungsvariante kann das Kühlsystem ferner eine erste Kühlmittelleitung, die dazu eingerichtet ist, von einer Wärmequelle erwärmtes Kühlmittel zu dem ersten Wärmetauscher zu leiten, eine dritte Kühlmittelleitung, die dazu eingerichtet ist, von dem ersten Wärmetauscher gekühltes Kühlmittel zu dem zweiten Wärmetauscher zu leiten, und eine vierte Kühlmittelleitung, die von der dritten Kühlmittelleitung abzweigt und dazu eingerichtet, Kühlmittel an dem zweiten Wärmetauscher vorbeizuführen, umfassen. Dabei ist das Ventil in der vierten Kühlmittelleitung angeordnet und dazu eingerichtet ist, den Volumenstrom des durch die vierte Kühlmittelleitung strömenden Kühlmittels zu regulieren, sodass der Volumenstrom des dem zweiten Wärmetauscher zugeführten Kühlmittels reguliert wird. Auch hier kann ein einfaches und kostengünstiges Ventil, das lediglich den Durchfluss durch die vierte Kühlmittelleitung reguliert, eingesetzt werden. Durch Verschließen des Ventils wird der Durchfluss durch die vierte Kühlmittelleitung gestoppt, sodass das den ersten Wärmetauscher verlassende Kühlmittel vollständig in den zweiten Wärmetauscher strömt. Durch (teilweises) Öffnen des Ventils wird zumindest ein Teil des den ersten Wärmetauscher verlassenden Kühlmittels durch die vierte Kühlmittelleitung an dem zweiten Wärmetauscher vorbeigeführt. Da der zweite Wärmetauscher einen höheren Fließwiderstand für das Kühlmittel darstellt als die vierte Kühlmittelleitung mit dem Ventil, wird bei geöffnetem Ventil das Kühlmittel überwiegend (wenn nicht vollständig) durch die vierte Kühlmittelleitung strömen.

In einer weiteren Ausgestaltungsvariante kann der mindestens eine Temperatursensor mindestens einen der folgenden Sensoren umfassen:
- einen (ersten) Temperatursensor, der dazu eingerichtet ist, eine Temperatur des Kühlmittels stromaufwärts direkt vor der Fördereinrichtung zu messen;
- einen (zweiten) Temperatursensor, der dazu eingerichtet ist, eine Temperatur des Kühlmittels stromabwärts direkt nach dem ersten Wärmetauscher zu messen;
- einen (dritten) Temperatursensor, der dazu eingerichtet ist, eine Temperatur des Kühlmittels stromabwärts direkt nach dem zweiten Wärmetauscher zu messen;
- einen (vierten) Temperatursensor, der dazu eingerichtet ist, eine Temperatur des Kühlmittels stromaufwärts direkt vor der Wärmequelle zu messen;
- einen (fünften) Temperatursensor, der dazu eingerichtet ist, eine Temperatur des Kühlmittels stromabwärts direkt nach der Wärmequelle zu messen.

Das Kühlsystem kann ferner einen der folgenden Sensoren umfassen:
- einen (sechsten) Temperatursensor, der dazu eingerichtet ist, eine Temperatur des ersten Fluidstroms stromaufwärts direkt vor dem ersten Wärmetauscher zu messen; und
- einen (siebten) Temperatursensor, der dazu eingerichtet ist, eine Temperatur des zweiten Fluidstroms stromaufwärts direkt vor dem zweiten Wärmetauscher zu messen.

Unter "direkt vor" bzw. "direkt nach" ist hier eine Anordnung des Sensors in unmittelbarer Nähe der jeweiligen Kühlsystemkomponente gemeint. D.h. zwischen Sensor und Komponente kann sich ein kurzes Stück Kühlmittelleitung bzw. Fluidleitung befinden oder der Sensor ist im Bereich eines Anschlusses der Kühlmittelleitung bzw. Fluidleitung an die Komponente angeordnet. Zweck dieser Anordnung ist, die Temperatur des Kühlmittels bzw. Fluids dort zu messen, wo keine signifikante Temperaturänderung mehr aufgrund einer weiteren Leitungsführung bis zur Komponente stattfindet.

Zusätzlich kann jeder Sensor durch einen Drucksensor ergänzt werden.

Die Steuereinheit kann dabei dazu eingerichtet sein, von jedem der Temperatur und Drucksensoren entsprechende Signale, die die/den bei dem jeweiligen Temperatur- und Drucksensor vorherrschende Temperatur/Druck des Kühlmittels repräsentieren, zu empfangen. Beispielsweise kann die Steuereinheit analoge und/oder digitale Signale von mindestens einem der Sensoren empfangen, um die/den Temperatur/Druck des Kühlmittels und/oder Fluidstroms zu ermitteln. Ferner kann die Steuereinheit aus den Signalen des sechsten und siebten Temperatursensors, die die Temperatur eines Fluidstroms misst, zumindest Rückschlüsse auf eine mögliche Temperatur des Kühlmittels nach Durchströmen des zugehörigen Wärmetauschers vornehmen. So kann die Steuereinheit beispielsweise aus den üblicherweise bekannten Leistungsparametern des zugehörigen Wärmetauschers und dem empfangenen Sensorsignal die geringste mögliche Temperatur des Kühlmittels nach Durchströmen des zugehörigen Wärmetauschers ermitteln.

In einer weiteren Ausgestaltungsvariante kann das Kühlsystem ferner eine Fluidstromleitung umfassen, die dazu eingerichtet ist, zumindest einen Teil des ersten Fluidstroms stromabwärts des ersten Wärmetauschers abzuzweigen und dem zweiten Fluidstrom stromaufwärts des zweiten Wärmetauschers zuzuführen. Alternativ oder zusätzlich kann das Kühlsystem auch eine Fluidstromleitung umfassen, die dazu eingerichtet ist, zumindest einen Teil des zweiten Fluidstroms stromabwärts des zweiten Wärmetauschers abzuzweigen und dem ersten Fluidstrom stromaufwärts des ersten Wärmetauschers zuzuführen. Optional kann das Kühlsystem auch mindestens eine Steuervorrichtung umfassen, die dazu eingerichtet ist, einen Volumenstrom des abgezweigten Fluidstroms oder der beiden abgezweigten Fluidströme durch die jeweilige Fluidstromleitung zu regulieren. In dieser Ausgestaltungsvariante ist es möglich, einem der beiden Wärmetauscher einen Fluidstrom bereitzustellen, der eine erhöhte Temperatur aufweist. Beispielsweise lässt sich dadurch ein doch vereister Wärmetauscher aufgrund des erwärmten Fluidstroms nach Durchströmen des anderen Wärmetauschers auftauen. Die Steuereinrichtung kann dazu eingerichtet sein, die Steuervorrichtung zur Steuerung des Volumenstroms des abgezweigten Fluidstroms zu regulieren, um den anderen Fluidstrom zu erwärmen.

In einer weiteren Ausgestaltung ist der erste und/oder zweite Wärmetauscher so ausgeführt, dass das Kühlmittel an einer Seite des jeweiligen Wärmetauschers eintritt, an der der Fluidstrom austritt, und an einer Seite des jeweiligen Wärmetauschers austritt, an der der Fluidstrom eintritt. Diese gegenläufige Durchströmung des Wärmetauschers durch den Kühlmittelstrom und den Fluidstrom erhöht die Effizienz des Kühlsystems. Dadurch lässt sich der erforderliche Fluidstrom reduzieren, was auch eine Reduzierung des notwendigen Querschnitts für den Fluidstrom und die damit einhergehende Reduzierung von Verwirbelungen an einer Außenhaut des Fahrzeugs ermöglicht.

In noch einer weiteren Ausgestaltung kann der erste Wärmetauscher und/oder der zweite Wärmetauscher ein Matrixwärmetauscher, ein Außenhautwärmetauscher oder eine Kombination eines Matrixwärmetauschers und eines Außenhautwärmetauschers sein. Ein Matrixwärmetauscher ermöglicht eine kompaktere Bauweise, da eine größere Oberfläche zwischen Kühlmittelstrom und Fluidstrom ermöglicht wird. Der Außenhautwärmetauscher benötigt hingegen keinen Fluideinlass und Fluidauslass in einer Außenhaut des Fahrzeugs, wodurch Verwirbelungen im Vergleich zu einem Matrixwärmetauscher reduziert werden.

Gemäß einem weiteren Aspekt umfasst ein Fahrzeug ein Kühlsystem gemäß dem ersten Aspekt oder einer der dazugehörigen Ausgestaltungsvarianten.

Ferner kann das Fahrzeug eine Wärmequelle umfassen, die von dem Kühlsystem gekühlt wird. Bei der Wärmequelle kann es sich beispielsweise um eine Passagierkabine, einen Frachtraum, ein Cockpit, ein Avionikbauteil, eine Hydraulikkomponente und/oder ein Elektronikbauteil handeln.

Nachfolgend werden Ausführungsbeispiele der Erfindung anhand der Zeichnungen näher beschrieben.
- Figur 1: zeigt schematisch ein konventionelles Kühlsystem mit Bypassleitung,
- Figur 2: zeigt schematisch ein konventionelles Kühlsystem mit Absperrvorrichtung in einer Kühlluftleitung,
- Figur 3: zeigt schematisch ein Kühlsystem gemäß der vorliegenden Offenbarung,
- Figur 4: zeigt schematisch eine Variante des Kühlsystems gemäß der vorliegenden Offenbarung,
- Figur 5: zeigt schematisch eine Fluidstromsteuerung für ein Kühlsystem, und
- Figur 6: zeigt schematisch ein Fahrzeug mit einem Kühlsystem.

Gemäß der vorliegenden Erfindung wird ein Kühlsystem mit einer Steuereinrichtung, die es ermöglicht, einen Volumenstrom eines Kühlmittels in dem Kühlsystem einem zweiten Wärmetauscher so zuzuführen, dass das Kühlmittel stromabwärts eines ersten und/oder des zweiten Wärmetauschers eine vorgegebenen Viskosität nicht überschreitet, sowie ein Fahrzeug mit solch einem Kühlsystem beschrieben.

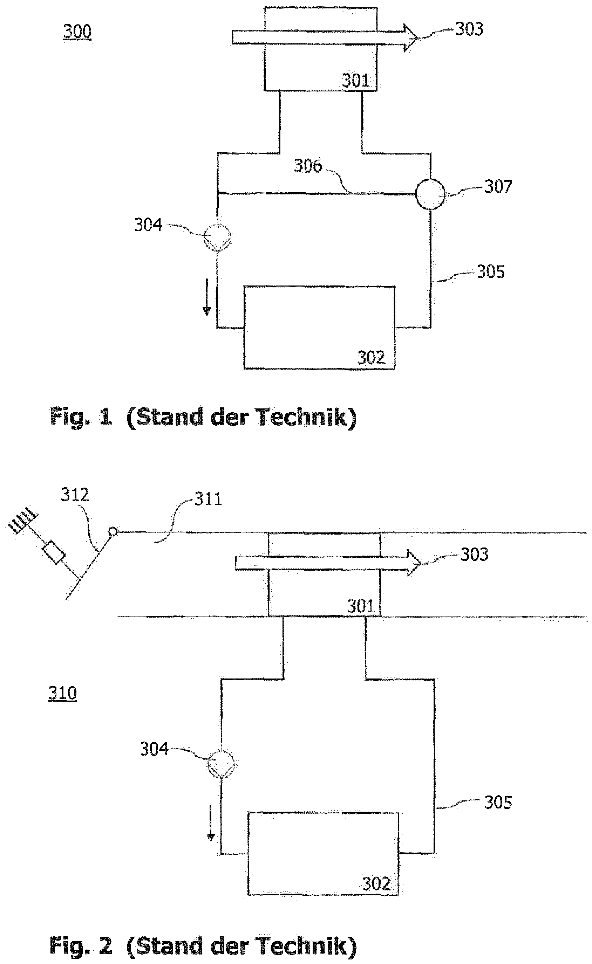

Figur 1 zeigt schematisch ein konventionelles Kühlsystem 300 mit einem Wärmetauscher 301 und einer Wärmequelle 302. Der Wärmetauscher 301 ist thermisch mit einer Wärmesenke gekoppelt, beispielsweise einem Luftstrom 303, um von der Wärmequelle 302 erzeugte Wärmeenergie abzugeben. In dem Kühlsystem 300 wird durch eine Fördereinrichtung 304 Kühlmittel in der durch einen Pfeil dargestellten Fließrichtung bewegt, sodass das Kühlmittel nach Aufnahme von Wärmeenergie von der Wärmequelle 302 durch eine Kühlmittelleitung 305 dem Wärmetauscher 301 zugeführt wird. Für den Fall, dass der Luftstrom 303 das Kühlmittel in dem Wärmetauscher 301 zu stark abkühlt, ist eine Bypassleitung 306 vorgesehen, die Kühlmittel an dem Wärmetauscher 301 vorbeileitet und stromaufwärts der Fördereinrichtung 304 mit dem gekühlten Kühlmittel aus dem Wärmetauscher 301 zusammenführt. Dadurch weist das zu der Fördereinrichtung 304 strömende Kühlmittel eine höhere Temperatur auf, sodass beispielsweise eine Viskosität des Kühlmittels begrenzt werden kann. Die Menge des durch die Bypassleitung 306 fließenden Kühlmittels wird durch ein Dreiwegeventil 307 gesteuert. Dieses Ventil 307 erlaubt eine vollständige oder teilweise Umlenkung des Kühlmittels aus der Leitung 305 in die Bypassleitung 306 und/oder den Wärmetauscher 301.

Figur 2 zeigt schematisch ein anderes konventionelles Kühlsystem 310, dass allgemein dem Kühlsystem 300 aus Figur 1 entspricht. Anstatt einer Bypassleitung 306 und zugehörigem Dreiwegeventil 307 (Figur 1), führt die Kühlmittelleitung 305 direkt in den Wärmetauscher 301. Um zu verhindern, dass das Kühlmittel, welches den Wärmetauscher 301 verlässt, zu stark abgekühlt ist und somit eine zu hohe Viskosität aufweist, kann eine Kühlluftleitung 311, durch die der Luftstrom 303 strömt und dem Wärmetauscher 301 zugeführt wird, mit einer Absperrvorrichtung 312 ausgestattet sein. Die Absperrvorrichtung 312, beispielsweise eine Klappe, kann den Luftstrom 303 beschränken oder ganz stoppen, also die Kühlluftleitung 311 vollständig verschließen. Dadurch wird die Wärmemenge, die von dem als Wärmesenke fungierenden Luftstrom 303 aufgenommen werden kann, begrenzt, sodass das Kühlmittel nach Verlassen des Wärmetauschers 301 eine gewünschte Temperatur nicht unterschreitet.

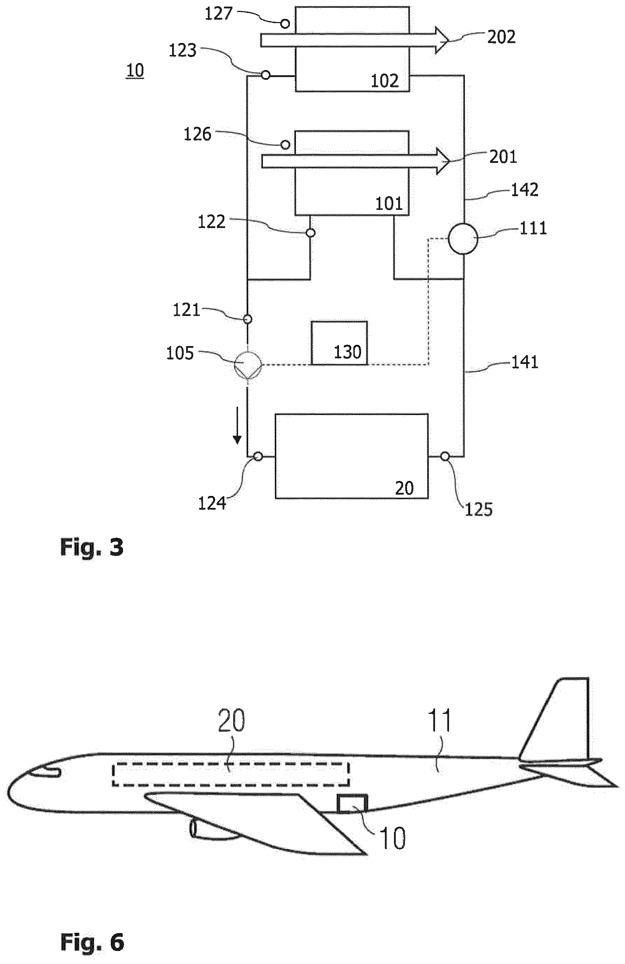

Figur 3 zeigt schematisch ein verbessertes Kühlsystem 10, das von einer Wärmequelle 20 erzeugte Abwärme abtransportieren kann. Hierfür weist das Kühlsystem 10 einen ersten Wärmetauscher 101 auf. Dieser kann einem durch das Kühlsystem strömenden Kühlmittel Wärmeenergie entziehen, wobei der Wärmetauscher 101 einen ersten Fluidstrom 201 als Wärmesenke nutzt. Der Fluidstrom 201 kann ein Luftstrom oder auch eine Flüssigkeit sein, die in der Lage ist, Wärmeenergie aufzunehmen und gegebenenfalls abzutransportieren. So kann der Fluidstrom 201 ein Luftstrom in einen Stauluftkanal sein, der durch die Bewegung eines Fahrzeugs an dem Wärmetauscher 101 vorbei- oder hindurchgeführt wird, oder stehende Luft in einem Bereich des Fahrzeugs, der über die Außenhaut des Fahrzeugs Wärme an die Umgebung abgibt, wie zum Beispiel ein Stauraum. Als Flüssigkeit kann ein Kühlmittel eines anderen Kühlkreislaufs verwendet werden oder ein stehendes Fluid, wie zum Beispiel ein Frischwassertank oder ein Treibstofftank.

Eine Fördereinrichtung 105 treibt das Kühlmittel an, sodass es kontinuierlich Wärmeenergie von der Wärmequelle 20 aufnehmen kann und kontinuierlich Wärmeenergie an den Fluidstrom 201 abgeben kann. Die hierfür notwendigen Leitungen sind in Figur 3 dargestellt, werden jedoch nicht alle näher erläutert, da es sich um übliche Kühlmittelleitungen eines Kühlsystems handelt. Die Kühlmittelleitungen bilden einen Kreislauf, wie es in Figur 3 gezeigt ist.

Um ein Überkühlen des Kühlmittels in dem Wärmetauscher 101 zu verhindern, also um das Kühlen des Kühlmittels unter eine Temperatur, in der das Kühlmittel eine zu hohe Viskosität aufweist, zu verhindern, ist ein zweiter Wärmetauscher 102 in dem Kühlsystem 10 vorgesehen. Der zweite Wärmetauscher 102 ist dazu eingerichtet, dem Kühlmittel Wärmeenergie zu entziehen, und nutzt dazu einen zweiten Fluidstrom 202 als Wärmesenke. Der zweite Fluidstrom 202 unterscheidet sich von dem ersten Fluidstrom 201. Der erste Wärmetauscher 101 kann daher kleiner dimensioniert werden als in konventionellen Systemen, da bei größerer erforderlicher Kühlleistung der zweite Wärmetauscher 102 "hinzugeschaltet" werden kann. Dadurch wird gewährleistet, dass den ersten und zweiten Wärmetauscher 102 verlassendes Kühlmittel nicht überkühlt ist. Beispielsweise kann es sich bei dem ersten Fluidstrom 201 um einen Luftstrom (zum Beispiel in einem Stauluftkanal) handeln, während der zweite Fluidstrom 202 eine Flüssigkeit ist, die als Wärmesenke fungiert. Dabei muss die Flüssigkeit keinen sich bewegenden Fluidstrom als solchen bilden, sondern kann ein Flüssigkeitsreservoir, wie zum Beispiel ein Frischwassertank, sein.

Selbstverständlich können der erste und zweite Fluidstrom 201, 202 auch denselben Ursprung haben. Beispielsweise können der erste und zweite Fluidstrom 201, 202 jeweils ein Teil eines Luftstroms in einem Stauluftkanal sein, wobei der Stauluftkanal nur einen Einlass und einen Auslass aufweist.

In jedem Fall sind die beiden Wärmetauscher 101, 102 im Hinblick auf die Fluidströme 201, 202 in dem in Figur 3 dargestellten Kühlsystem 10 parallel zueinander angeordnet.

Das in Figur 3 dargestellte Kühlsystem 10 weist zudem auch eine parallele Anordnung der Wärmetauscher 101, 102 im Hinblick auf den Kühlmittelstrom auf. Mit anderen Worten führt die Fördereinrichtung 105 das Kühlmittel sowohl dem ersten Wärmetauscher 101 als auch dem zweiten Wärmetauscher 102 zu, wobei ein Ventil 111 einen Volumenstrom des Kühlmittels, das dem zweiten Wärmetauscher 102 zugeführt wird, regulieren kann. Mit anderen Worten reguliert das Ventil 111 den Volumenstrom des Kühlmittels, das durch den zweiten Wärmetauscher 102 gekühlt wird.

Das Ventil 111 könnte zwar als Dreiwegeventil ausgebildet sein, sodass das Ventil 111 ein durch eine von der Wärmequelle 20 kommende Kühlmittelleitung 141 strömendes Kühlmittel entweder zu dem ersten Wärmetauscher 101 oder zu dem zweiten Wärmetauscher 102 oder zu beiden Wärmetauschern 101, 102 leitet. In der in Figur 3 dargestellten Variante wird jedoch ein kostengünstigeres "normales" Ventil in einer Kühlmittelleitung 142 die von der von der Wärmequelle 20 kommenden Kühlmittelleitung 141 abzweigt und zu dem zweiten Wärmetauscher 102 führt. Durch Schließen des Ventils 111 wird das Kühlmittel ausschließlich durch den ersten Wärmetauscher 101 geführt und der zweite Wärmetauscher 102 wird "abgeschaltet".

Eine Steuereinheit 130 ist in dem Kühlsystem 10 vorgesehen, um die Fördereinrichtung 105 und/oder das Ventil 111 zu steuern. So kann die Steuereinheit 130 ein Signal an die Fördereinrichtung 105 senden, um eine Fördermenge der Fördereinrichtung 105 zu bestimmen, also einen durch die Fördereinrichtung 105 bewegten Volumenstrom des Kühlmittels in dem Kühlsystem 10. Das Ventil 111 kann durch die Steuereinheit 130 dahingehend reguliert werden, dass ein Durchflussquerschnitt des Ventils 111 eingestellt wird, wonach ein Volumenstrom des Kühlmittels durch den zweiten Wärmetauscher 102 reguliert wird. Die Steuereinheit 130 ist dazu eingerichtet, die Fördermenge der Fördereinrichtung 105 und/oder den von dem Ventil 111 regulierten Volumenstrom derart zu steuern, dass eine Temperatur des Kühlmittels einen Schwellenwert, der einer vorgegebenen Viskosität des Kühlmittels entspricht, nicht unterschritten wird. Dadurch wird verhindert, dass das Kühlmittel von der Fördereinrichtung 105 nicht oder nur sehr schlecht bewegt werden kann, und somit wird die Fördereinrichtung 105 vor Schäden bewahrt.

Dabei kann die Steuereinheit 130 so ausgelegt sein, dass die Kühlmitteltemperatur stromabwärts des ersten Wärmetauschers 101 und/oder des zweiten Wärmetauschers 102 oder stromaufwärts (direkt) vor der Fördereinrichtung 105 den Schwellenwert nicht unterschreitet. Hierfür kann mindestens ein Temperatursensor 121 in dem Kühlsystem 10 angeordnet sein, der eine Temperatur des Kühlmittels misst.

Alternativ oder zusätzlich kann die Steuereinheit 130 so ausgelegt sein, dass ein Kühlmitteldruck stromabwärts des ersten Wärmetauschers 101 und/oder des zweiten Wärmetauschers 102 oder stromaufwärts (direkt) vor der Fördereinrichtung 105 einen Schwellenwert nicht unterschreitet. Hierfür kann mindestens ein Drucksensor (nicht gesondert dargestellt) in dem Kühlsystem 10 angeordnet sein, der einen Druck des Kühlmittels misst. Die nachfolgend für Temperatursensoren beschriebenen Eigenschaften des Systems gelten gleichermaßen für Drucksensoren.

Der Temperatursensor 121 kann stromaufwärts vor der Fördereinrichtung 105 angeordnet sein. Selbstverständlich kann der eine oder ein zusätzlicher Temperatursensor 122 stromabwärts (kurz oder direkt) nach dem ersten Wärmetauscher 101 und/oder ein Temperatursensor 123 stromabwärts (kurz oder direkt) nach dem zweiten Wärmetauscher 102 in dem Kühlsystem 10 angeordnet sein. Weitere Temperatursensoren 124 und 125 können stromaufwärts (kurz oder direkt) vor der Wärmequelle 20 und/oder stromabwärts (kurz oder direkt) nach der Wärmequelle 20 in dem Kühlsystem 10 angeordnet sein.

Selbstverständlich kann auch die Temperatur mindestens eines der Fluidströme 201, 202 gemessen werden. Hierfür können Temperatursensoren 126 und 127 in dem Kühlsystem 10 vorgesehen sein, die eine Temperatur des ersten Fluidstroms 201 stromaufwärts (kurz oder direkt) vor dem ersten Wärmetauscher 101 bzw. eine Temperatur des zweiten Fluidstroms 202 stromaufwärts (kurz oder direkt) vor dem zweiten Wärmetauscher 102 messen.

Die Steuereinheit 130 kann mit jedem dieser Sensoren verbunden sein, um anhand der Temperatur und/oder des Drucks Rückschlüsse auf die Viskosität des Kühlmittels zu ziehen. Auf Basis der ermittelten Temperatur und/oder Drucks kann die Steuereinheit 130 die Fördermenge der Fördereinrichtung 105 und/oder den Volumenstrom des Kühlmittels, der vom Ventil 111 zu dem zweiten Wärmetauscher 102 strömt, bestimmen und regulieren. Dadurch kann die Steuereinheit 130 verhindern, dass die Viskosität des Kühlmittels einen kritischen Wert übersteigt, bei dem das Kühlsystem nicht mehr ordentlich funktioniert.

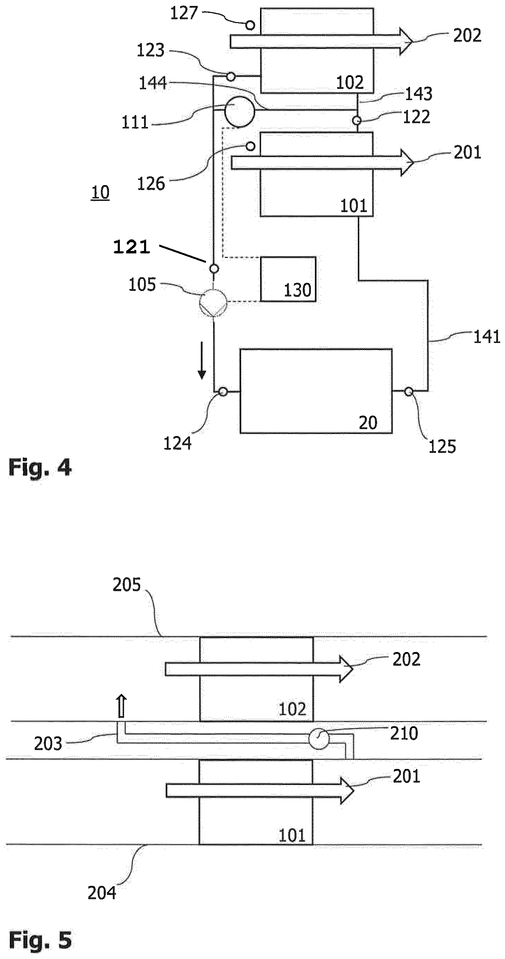

Figur 4 zeigt schematisch eine Variante des Kühlsystems 10 gemäß der vorliegenden Offenbarung, wobei die Kühlmittelleitung 142 nicht von der Kühlmittelleitung 141 abzweigt. Vielmehr umfasst das Kühlsystem 10 eine dritte Kühlmittelleitung 143, um von dem ersten Wärmetauscher 101 gekühltes Kühlmittel zu dem zweiten Wärmetauscher 102 zu leiten. Der erste und zweite Wärmetauscher 101, 102 sind demnach im Hinblick auf den Kühlmittelstrom in Reihe geschaltet. Um den Kühlmittelstrom in den zweiten Wärmetauscher zu steuern, ist eine vierte Kühlmittelleitung 144 in dem Kühlsystem 10 vorgesehen, die von der dritten Kühlmittelleitung 143 abzweigt und Kühlmittel an dem zweiten Wärmetauscher 102 vorbeiführt. Das Ventil 111 ist in dieser Ausgestaltung in der vierten Kühlmittelleitung 144 angeordnet, um den Volumenstrom des durch die vierte Kühlmittelleitung 144 strömenden Kühlmittels zu regulieren. Dies erlaubt ebenfalls eine Regulierung des Volumenstroms des Kühlmittels durch den zweiten Wärmetauscher 102 durch die Steuereinheit 130.

Figur 5 zeigt schematisch eine Fluidstromsteuerung für ein Kühlsystem 10, wobei lediglich der erste und zweite Wärmetauscher 101, 102 des Kühlsystems 10 dargestellt sind. Die übrigen Elemente des Kühlsystems 10 können denen der in den Figuren 3 und 4 dargestellten Varianten entsprechen.

Die Fluidstromsteuerung kann eine Fluidleitung 203 vorsehen, durch die zumindest ein Teil des ersten Fluidstroms 201 stromabwärts des ersten Wärmetauschers 101 abgezweigt wird und dem zweiten Fluidstrom 202 stromaufwärts des zweiten Wärmetauschers 102 zugeführt wird. Beispielsweise kann ein Fluidkanal 204, in dem der erste Wärmetauscher 101 angeordnet ist und der erste Fluidstrom 201 strömt, eine Abzweigung stromabwärts (im Hinblick auf den Fluidstrom 201) aufweisen, von der sich die Fluidleitung 203 erstreckt. Ebenso kann ein Fluidkanal 205, in dem der zweite Wärmetauscher 102 angeordnet ist und der zweite Fluidstrom 202 strömt, eine Abzweigung oder Einleitung aufweisen, zu der sich die Fluidleitung 203 erstreckt. Mit anderen Worten bildet die Fluidleitung 203 eine Verbindung der Fluidkanäle 204 und 205, wobei Abschnitte der Fluidkanäle 204 und 205 stromabwärts bzw. stromaufwärts des jeweiligen Wärmetauschers 101, 102 miteinander verbunden sind.

Selbstverständlich kann die Fluidleitung 203 auch in umgekehrter Richtung vorgesehen sein (nicht dargestellt). Dabei würde ein Abschnitt des Fluidkanals 205 des zweiten Fluidstroms 202 stromabwärts des zweiten Wärmetauschers 102 mit einem Abschnitt des Fluidkanals 204 des ersten Fluidstroms 201 stromaufwärts des ersten Wärmetauschers 101 durch die Fluidleitung 203 verbunden sein.

In beiden Fällen kann die Fluidleitung 203 eine Steuervorrichtung 210 umfassen, die einen Volumenstrom des abgezweigten Fluidstroms durch die Fluidleitung 203 reguliert. Bei der Steuervorrichtung 210 kann es sich um ein Ventil, eine Klappe oder ein anderes Absperrorgan handeln, das in der Lage ist, einen Querschnitt der Fluidstromleitung 203 zu verschließen oder zu öffnen.

Durch den abgezweigten Fluidstrom kann dem jeweils nachgeschalteten Wärmetauscher 101, 102 erwärmtes Fluid zugeführt werden. Dadurch lässt sich ein Überkühlen des Kühlmittels in dem Kühlsystem 10 vermeiden, falls beide Fluidströme 201, 202 eine zu geringe Temperatur aufweisen, sodass die Viskosität des Kühlmittels nicht unter dem gewünschten kritischen Wert gehalten werden kann. Auch ist es möglich, einen der Wärmetauscher 101, 102 zu enteisen, beispielsweise wenn der zweite Wärmetauscher 102 über einen längeren Zeitraum im Kühlsystem 10 nicht verwendet wurde und das sich im Wärmetauscher 102 befindliche Kühlmittel eine sehr hohe Viskosität erreicht hat oder gefroren ist.

Die Steuervorrichtung 210 kann ferner eine Fördereinrichtung (nicht gesondert dargestellt) umfassen, um das von einem Wärmetauscher 101, 102 erwärmte Fluid durch die Fluidstromleitung 203 zu dem anderen Wärmetauscher 101, 102 stromaufwärts in Richtung des jeweiligen Fluidstroms 201, 202 zu bewegen.

Figur 6 zeigt schematisch ein Fahrzeug 11 mit einem Kühlsystem 10. Obwohl das Fahrzeug 11 als Flugzeug dargestellt ist, kann es sich auch um einen Bus, einen Zug, ein Schiff oder anderes Fahrzeug handeln. In dem Fahrzeug 11 ist eine Wärmequelle 20 angeordnet, die durch das Kühlsystem 10 gekühlt wird. Bei der Wärmequelle 20 kann es sich um eine Passagierkabine, einen Frachtraum, ein Cockpit, ein Avionikbauteil, eine Hydraulikkomponente und/oder ein Elektronikbauteil handeln.

Der erste und/oder zweite Wärmetauscher 101, 102 des Kühlsystems 10 kann als Matrixwärmetauscher oder als Außenhautwärmetauscher oder in Form einer Kombination eines Matrixwärmetauschers mit einem Außenhautwärmetauscher implementiert sein. So kann der erste und/oder zweite Wärmetauscher 101, 102 an einer Außenhaut des Fahrzeugs 11 einen Außenhautwärmetauscher bilden, wie dies in Figur 6 dargestellt ist. Selbstverständlich kann der erste und/oder zweite Wärmetauscher 101, 102 auch im Inneren des Fahrzeugs 11 angeordnet sein und in Form eines Matrixwärmetauschers implementiert sein. In beiden Varianten wird das Kühlmittel des Kühlsystems 10 mit einem Fluidstrom 201, 202 oder einem statischen Fluid thermisch gekoppelt. Bei den Fluidströmen 201, 202 kann es sich um Umgebungsluft handeln, die an einer Außenhaut des Fahrzeugs 11 entlang strömt und/oder durch einen Einlass in einen Fluidkanal 204, 205 in das Innere des Fahrzeugs 11 strömt.

## Patentansprüche

1. Kühlsystem (10) mit Vereisungsschutz für ein in einem Kühlkreislauf des Kühlsystems (10) strömendes Kühlmittel, umfassend:
- eine Wärmequelle (20), die Abwärme an das Kühlmittel in dem Kühlkreislauf abgibt und das Kühlmittel erwärmt;
- einen ersten Wärmetauscher (101), der dazu eingerichtet ist, dem von der Wärmequelle (20) erwärmten Kühlmittel Wärmeenergie zu entziehen, wobei der erste Wärmetauscher (101) einen ersten Fluidstrom (201) als Wärmesenke nutzt;
- einen zweiten Wärmetauscher (102), der dazu eingerichtet ist, dem von der Wärmequelle (20) erwärmten Kühlmittel Wärmeenergie zu entziehen, wobei der zweite Wärmetauscher (102) einen zweiten Fluidstrom (202), der sich von dem ersten Fluidstrom (201) unterscheidet, als Wärmesenke nutzt; und
- eine Fördereinrichtung (105), die dazu eingerichtet ist, das Kühlmittel dem ersten Wärmetauscher (101) und dem zweiten Wärmetauscher (102) zuzuführen, **gekennzeichnet durch**:
- ein Ventil (111), das dazu eingerichtet ist, einen Volumenstrom des Kühlmittels, das dem zweiten Wärmetauscher (102) zugeführt wird, zu regulieren;
- mindestens einen Temperatursensor (121 - 125), der dazu eingerichtet ist, eine Temperatur des Kühlmittels stromabwärts des ersten Wärmetauschers (101) und/oder des zweiten Wärmetauschers (102) zu messen; und
- eine Steuereinheit (130), die dazu eingerichtet ist, eine Fördermenge der Fördereinrichtung (105) und/oder den von dem Ventil (111) regulierten Volumenstrom derart zu steuern, dass die von dem Temperatursensor (121 - 125) gemessene Temperatur einen Schwellenwert, der einer vorgegebenen Viskosität des Kühlmittels entspricht, nicht unterschreitet.

2. Kühlsystem (10) gemäß Anspruch 1, ferner umfassend:
- eine erste Kühlmittelleitung (141), die dazu eingerichtet ist, das von der Wärmequelle (20) erwärmte Kühlmittel zu dem ersten Wärmetauscher (101) zu leiten; und
- eine zweite Kühlmittelleitung (142), die von der ersten Kühlmittelleitung (141) abzweigt und dazu eingerichtet ist, das von der Wärmequelle (20) erwärmte Kühlmittel zumindest teilweise zu dem zweiten Wärmetauscher (102) zu leiten, wobei das Ventil (111) in der zweiten Kühlmittelleitung (142) angeordnet ist und dazu eingerichtet ist, den Volumenstrom des durch die zweite Kühlmittelleitung (142) strömenden Kühlmittels zu regulieren.

3. Kühlsystem (10) gemäß Anspruch 1, ferner umfassend:
- eine erste Kühlmittelleitung (141), die dazu eingerichtet ist, das von der Wärmequelle (20) erwärmte Kühlmittel zu dem ersten Wärmetauscher (101) zu leiten;
- eine dritte Kühlmittelleitung (143), die dazu eingerichtet ist, von dem ersten Wärmetauscher (101) gekühltes Kühlmittel zu dem zweiten Wärmetauscher (102) zu leiten; und
- eine vierte Kühlmittelleitung (144), die von der dritten Kühlmittelleitung (143) abzweigt und dazu eingerichtet ist, Kühlmittel an dem zweiten Wärmetauscher (102) vorbeizuführen,
wobei das Ventil (111) in der vierten Kühlmittelleitung (144) angeordnet ist und dazu eingerichtet ist, den Volumenstrom des durch die vierte Kühlmittelleitung (144) strömenden Kühlmittels zu regulieren, sodass der Volumenstrom des dem zweiten Wärmetauscher (102) zugeführten Kühlmittels reguliert wird.

4. Kühlsystem (10) gemäß Anspruch 2 oder 3, wobei der mindestens eine Temperatursensor (121 - 125) umfasst:
- einen Temperatursensor (121), der dazu eingerichtet ist, eine Temperatur des Kühlmittels stromaufwärts direkt vor der Fördereinrichtung (105) zu messen;
- einen Temperatursensor (122), der dazu eingerichtet ist, eine Temperatur des Kühlmittels stromabwärts direkt nach dem ersten Wärmetauscher (101) zu messen;
- einen Temperatursensor (123), der dazu eingerichtet ist, eine Temperatur des Kühlmittels stromabwärts direkt nach dem zweiten Wärmetauscher (102) zu messen;
- einen Temperatursensor (124), der dazu eingerichtet ist, eine Temperatur des Kühlmittels stromaufwärts direkt vor der Wärmequelle (20) zu messen;
- einen Temperatursensor (125), der dazu eingerichtet ist, eine Temperatur des Kühlmittels stromabwärts direkt nach der Wärmequelle (20) zu messen; wobei das Kühlsystem ferner die folgenden Sensoren umfasst:
- einen Temperatursensor (126), der dazu eingerichtet ist, eine Temperatur des ersten Fluidstroms (201) stromaufwärts direkt vor dem ersten Wärmetauscher (101) zu messen; und
- einen Temperatursensor (127), der dazu eingerichtet ist, eine Temperatur des zweiten Fluidstroms (202) stromaufwärts direkt vor dem zweiten Wärmetauscher (102) zu messen,
wobei die Steuereinheit (130) dazu eingerichtet ist, von jedem der Temperatursensoren (121 - 127) entsprechende Signale, die die von dem jeweiligen Temperatursensor (121 - 127) gemessene Temperatur repräsentieren, zu empfangen.

5. Kühlsystem (10) gemäß einem der Ansprüche 1 bis 4, ferner umfassend:
- eine Fluidleitung (203), die dazu eingerichtet ist, zumindest einen Teil des ersten Fluidstroms (201) stromabwärts des ersten Wärmetauschers (101) abzuzweigen und dem zweiten Fluidstrom (202) stromaufwärts des zweiten Wärmetauschers (102) zuzuführen; und
- eine Steuervorrichtung (210), die dazu eingerichtet ist, einen Volumenstrom des abgezweigten Fluidstroms durch die Fluidleitung (203) zu regulieren.

6. Kühlsystem (10) gemäß einem der Ansprüche 1 bis 5, wobei der erste Wärmetauscher (101) und/oder der zweite Wärmetauscher (102) ein Matrixwärmetauscher, ein Außenhautwärmetauscher oder eine Kombination eines Matrixwärmetauschers und eines Außenhautwärmetauschers ist/sind.

7. Fahrzeug (11) mit einem Kühlsystem (10) gemäß einem der Ansprüche 1 bis 6.

8. Fahrzeug (11) gemäß Anspruch 7, wobei die Wärmequelle (20), die von dem Kühlsystem (10) gekühlt wird, eine Passagierkabine, ein Frachtraum, ein Cockpit, ein Avionikbauteil, eine Hydraulikkomponente und/oder ein Elektronikbauteil ist.

## Claims

1. Cooling system (10) with icing protection for a coolant flowing in a cooling circuit of the cooling system (10), comprising:
- a heat source (20) which releases waste heat to the coolant in the cooling circuit and heats the coolant;
- a first heat exchanger (101) which is configured to extract heat energy from the coolant heated by the heat source (20), wherein the first heat exchanger (101) uses a first fluid flow (201) as a heat sink;
- a second heat exchanger (102) which is configured to extract heat energy from the coolant heated by the heat source (20), wherein the second heat exchanger (102) uses a second fluid flow (202), which is different from the first fluid flow (201), as a heat sink; and
- a conveying device (105) which is configured to feed the coolant to the first heat exchanger (101) and to the second heat exchanger (102),
**characterized by**:
- a valve (111) which is configured to regulate a volume flow of the coolant which is fed to the second heat exchanger (102);
- at least one temperature sensor (121-125) which is configured to measure a temperature of the coolant downstream of the first heat exchanger (101) and/or the second heat exchanger (102); and
- a control unit (130) which is configured to control a conveying rate of the conveying device (105), and/or the volume flow regulated by the valve (111), in such a way that the temperature measured by the temperature sensor (121-125) does not fall below a threshold value corresponding to a predefined viscosity of the coolant.

2. Cooling system (10) according to Claim 1, furthermore comprising:
- a first coolant line (141) which is configured to conduct the coolant heated by the heat source (20) to the first heat exchanger (101); and
- a second coolant line (142) which branches off from the first coolant line (141) and is configured to at least partially conduct the coolant heated by the heat source (20) to the second heat exchanger (102),
wherein the valve (111) is arranged in the second coolant line (142) and is configured to regulate the volume flow of the coolant flowing through the second coolant line (142).

3. Cooling system (10) according to Claim 1, furthermore comprising:
- a first coolant line (141) which is configured to conduct the coolant heated by the heat source (20) to the first heat exchanger (101);
- a third coolant line (143) which is configured to conduct coolant cooled by the first heat exchanger (101) to the second heat exchanger (102); and
- a fourth coolant line (144) which branches off from the third coolant line (143) and is configured to guide coolant past the second heat exchanger (102),
wherein the valve (111) is arranged in the fourth coolant line (144) and is configured to regulate the volume flow of the coolant flowing through the fourth coolant line (144), so that the volume flow of the coolant fed to the second heat exchanger (102) is regulated.

4. Cooling system (10) according to Claim 2 or 3, wherein the at least one temperature sensor (121-125) comprises:
- a temperature sensor (121) which is configured to measure a temperature of the coolant directly upstream of the conveying device (105);
- a temperature sensor (122) which is configured to measure a temperature of the coolant directly downstream of the first heat exchanger (101);
- a temperature sensor (123) which is configured to measure a temperature of the coolant directly downstream of the second heat exchanger (102);
- a temperature sensor (124) which is configured to measure a temperature of the coolant directly upstream of the heat source (20);
- a temperature sensor (125) which is configured to measure a temperature of the coolant directly downstream of the heat source (20);
wherein the cooling system furthermore comprises the following sensors:
- a temperature sensor (126) which is configured to measure a temperature of the first fluid flow (201) directly upstream of the first heat exchanger (101); and
- a temperature sensor (127) which is configured to measure a temperature of the second fluid flow (202) directly upstream of the second heat exchanger (102),
wherein the control unit (130) is configured to receive from each of the temperature sensors (121-127) corresponding signals representing the temperature measured by the respective temperature sensor (121-127).

5. Cooling system (10) according to one of Claims 1 to 4, furthermore comprising:
- a fluid line (203) which is configured to branch off at least a part of the first fluid flow (201) downstream of the first heat exchanger (101) and to feed this to the second fluid flow (202) upstream of the second heat exchanger (102); and
- a control apparatus (210) which is configured to regulate a volume flow of the branched-off fluid flow through the fluid line (203).

6. Cooling system (10) according to one of Claims 1 to 5, wherein the first heat exchanger (101) and/or the second heat exchanger (102) are/is a matrix-type heat exchanger, an outer-skin heat exchanger or a combination of a matrix-type heat exchanger and an outer-skin heat exchanger.

7. Vehicle (11) having a cooling system (10) according to one of Claims 1 to 6.

8. Vehicle (11) according to Claim 7, wherein the heat source (20) which is cooled by the cooling system (10) is a passenger cabin, a cargo compartment, a cockpit, an avionics component, a hydraulic component and/or an electronic component.

## Revendications

1. Système de refroidissement (10) comprenant une protection antigivrage destinée à un agent réfrigérant circulant dans un circuit de refroidissement du système de refroidissement (10), ledit système comprenant:
- une source de chaleur (20) qui délivre de la chaleur perdue à l'agent réfrigérant situé dans le circuit de refroidissement et qui chauffe l'agent réfrigérant;
- un premier échangeur de chaleur (101) qui est conçu pour prélever de l'énergie calorifique de l'agent réfrigérant chauffé par la source de chaleur (20), le premier échangeur de chaleur (101) utilisant un premier flux de fluide (201) comme dissipateur de chaleur;
- un deuxième échangeur de chaleur (102) qui est conçu pour prélever de l'énergie calorifique de l'agent réfrigérant chauffé par la source de chaleur (20), le deuxième échangeur de chaleur (102) utilisant un deuxième flux de fluide (202), qui diffère du premier flux de fluide (201), comme dissipateur de chaleur; et
- une installation de transport (105) qui est conçue pour amener l'agent réfrigérant au premier échangeur de chaleur (101) et au deuxième échangeur de chaleur (102),
**caractérisé par**:
- une vanne (111) qui est conçue pour réguler un débit volumique de l'agent réfrigérant qui est amené au deuxième échangeur de chaleur (102);
- au moins un capteur de température (121 - 125) qui est conçu pour mesurer une température de l'agent réfrigérant en aval du premier échangeur de chaleur (101) et/ou du deuxième échangeur de chaleur (102); et
- une unité de commande (130) qui est conçue pour commander un volume de transport de l'installation de transport (105) et/ou le flux volumique régulé par la vanne (111) de manière que la température mesurée par le capteur de température (121 - 125) ne tombe pas au-dessous d'une valeur seuil qui correspond à une viscosité spécifiée de l'agent réfrigérant.

2. Système de réfrigération (10) selon la revendication 1, comprenant en outre:
- une première conduite d'agent réfrigérant (141) qui est conçue pour diriger l'agent réfrigérant chauffé par la source de chaleur (20) vers le premier échangeur de chaleur (101); et
- une deuxième conduite d'agent réfrigérant (142) qui dérive de la première conduite d'agent réfrigérant (141) et qui est conçue pour diriger au moins partiellement l'agent réfrigérant chauffé par la source de chaleur (20) vers le deuxième échangeur de chaleur (102),
la vanne (111) étant disposée dans la deuxième conduite d'agent réfrigérant (142) et étant conçue pour réguler le flux volumique de l'agent réfrigérant s'écoulant à travers la deuxième conduite d'agent réfrigérant (142).

3. Système de réfrigération (10) selon la revendication 1, comprenant en outre:
- une première ligne d'agent réfrigérant (141) qui est conçue pour diriger l'agent réfrigérant chauffé par la source de chaleur (20) vers le premier échangeur de chaleur (101);
- une troisième conduite d'agent réfrigérant (143) qui est conçue pour diriger l'agent réfrigérant refroidi par le premier échangeur de chaleur (101) vers le deuxième échangeur de chaleur (102); et
- une quatrième conduite d'agent réfrigérant (144) qui dérive de la troisième conduite d'agent réfrigérant (143) et qui est conçue pour faire passer l'agent réfrigérant par le deuxième échangeur de chaleur (102),
la vanne (111) étant disposée dans la quatrième conduite d'agent réfrigérant (144) et étant conçue pour réguler le flux volumique d'agent réfrigérant qui s'écoule à travers la quatrième conduite d'agent réfrigérant (144) de manière à réguler le flux volumique d'agent réfrigérant amené au deuxième échangeur de chaleur (102).

4. Système de refroidissement (10) selon la revendication 2 ou 3, l'au moins un capteur de température (121 - 125) comprenant:
- un capteur de température (121) qui est conçu pour mesurer une température de l'agent réfrigérant en amont juste avant l'installation de transport (105);
- un capteur de température (122) qui est conçu pour mesurer une température de l'agent réfrigérant en aval juste après le premier échangeur de chaleur (101);
- un capteur de température (123) qui est conçu pour mesurer une température de l'agent réfrigérant en aval juste après le deuxième échangeur de chaleur (102);
- un capteur de température (124) conçu pour mesurer une température de l'agent réfrigérant en amont juste avant la source de chaleur (20);
- un capteur de température (125) conçu pour mesurer une température de l'agent réfrigérant en aval juste après la source de chaleur (20);
le système de refroidissement comprenant en outre les capteurs suivants:
- un capteur de température (126) conçu pour mesurer une température du premier flux de fluide (201) en amont juste avant le premier échangeur de chaleur (101); et
- un capteur de température (127) qui est conçu pour mesurer une température du deuxième flux de fluide (202) en amont juste avant le deuxième échangeur de chaleur (102),
l'unité de commande (130) étant conçue pour recevoir de chacun des capteurs de température (121-127) des signaux correspondants qui représentent la température mesurée par le capteur de température respectif (121-127).

5. Système de refroidissement (10) selon l'une des revendications 1 à 4, comprenant en outre:
- une conduite de fluide (203) qui est conçue pour dériver au moins une partie du premier flux de fluide (201) en aval du premier échangeur de chaleur (101) et pour l'amener au deuxième flux de fluide (202) en amont du deuxième échangeur de chaleur (102); et
- un dispositif de commande (210) qui est conçu pour réguler un flux volumique du flux de fluide dérivé à travers la conduite de fluide (203).

6. Système de refroidissement (10) selon l'une des revendications 1 à 5, le premier échangeur de chaleur (101) et/ou le deuxième échangeur de chaleur (102) étant un échangeur de chaleur à matrice, un échangeur de chaleur à peau ou une combinaison d'un échangeur de chaleur à matrice et d'un échangeur de chaleur à peau.

7. Véhicule (11) comprenant un système de refroidissement (10) selon l'une des revendications 1 à 6.

8. Véhicule (11) selon la revendication 7, la source de chaleur (20) qui est refroidie par le système de refroidissement (10) étant une cabine de passagers, une soute, un cockpit, un composant avionique, un composant hydraulique et/ou un composant électronique.
